# EUROPEAN PATENT APPLICATION

(11) **EP 4 403 501 A1**
(43) Date of publication of application: **24.07.2024**
(21) Application number: 23166294.1
(22) Date of filing: 03.04.2023
(51) Int. Cl.: B65H 19/30, B65H 19/12

(54) **HANDOVER STATION AND METHOD FOR TRANSFERRING A ROLL**

(30) Priority: 18.01.2023 CN 202310100868
(71) Applicant: BHS Intralogistics GmbH, 93073 Neutraubling (DE)
(72) Inventor: ZHANG, Tom, 201707 Shanghai (CN); PENG, Brant, 201707 Shanghai (CN); SHAO, Jacky, 201707 Shanghai (CN)
(74) Representative: FDST Patentanwälte

(57) **Abstract**

A Handover station (2) for transferring a roll (4) between a storage site (6) and a production site (8) of a plant (10) is described, comprising a first lane (14) for a first transport vehicle (16) for transporting a roll (4) to or from the storage site (6), a second lane (16) for a second transport vehicle (20) for transporting a roll (4) to or from the production site (8), a gantry (22) with a number of rails (24) bridging the first lane (14) and the second lane (18), a railcar (26), which is movable along the rails (24) to transfer a roll (4) from the first lane (14) to the second lane (18) or vice versa, wherein the railcar (26) comprises a clamping device (30) for holding the roll (4), wherein the railcar (26) comprises a lifting device (28) for vertically moving the clamping device (30) and thereby lift or lower the roll (4) from or to one of the transport vehicles (16, 20) in one of the lanes (14, 18). Further, a corresponding method for transferring a roll (4) with such a handover station (2) is described.

## Description

The invention concerns a handover station for transferring a roll, in particular paper roll, from a storage site to a production site or vice versa. The production site preferably comprises a corrugator, which manufactures corrugated board from paper rolls from the storage. The invention further concerns a corresponding method for transferring a roll by using such a handover station.

For large tonnage circular roll-like articles, like paper rolls used for production of corrugated board, any loading and unloading and generally any handling of the rolls is at least partly manual and not fully automated. More specifically, a handling system for transferring rolls between two fixed points may use a combination of carrying systems, which may be forklifts, cranes, simple hangers, etc. For example, a forklift with a paper roll clamp, a vacuum chuck, a travelling crane with a clamp or a simple sling may be used to transfer a roll between two points. These solutions each have distinct disadvantages. A simple sling requires cumbersome and inefficient manual operation. Clamping of the cylindrical surface of the paper roll causes damage to the paper roll. A vacuum chuck needs to be equipped with an appropriate vacuum system. Also, it can only pick up a paper roll via a flat surface of the paper roll and cannot pick up horizontally placed paper rolls. A forklift with a clamping device regularly damages the paper roll surface and potentially also the carrier vehicle. For a travelling crane, a motor directly drives track wheels and only poor positioning accuracy can be achieved. In addition, safety problems such as derailing or rollover are also risks to be considered for a travelling crane. Additionally, when two independent motors are used with two tracks, operation synchronization and motion parallelism is a challenge. Simple hoisting devices using wire ropes or slings usually have load swing and work efficiency problems. Travel and lift drives may use an AC asynchronous motor, which has limited accuracy. Also, the systems mentioned above are not capable of full automation.

US 5 085 377 A describes a process for feeding paper rolls for supplying web-fed rotary presses with paper rolls and for disposing of remnants from web-fed rotary presses. The system is designed to be so redundant such that partially manual or completely manual operation is possible in the case of failure of one or several components.

Various handling systems for rolls are described in US 4 720 231 A, CN 111 807 127 A, EP 1 876 126 A2 and CN 112 897 153 A.

Against this background it is a task of the invention to provide an improved handover station and method for transferring paper rolls between a storage site and a production site. In particular, the handover station shall be fully automatic and not require any manual interaction. In addition, the operation of the handover station shall be as accurate, reliable and safe as possible. Further, the handover station shall overcome as many of the above listed disadvantages as possible.

The task is solved according to the invention by a handover station with the features according to claim 1 and by a method with the features according to claim 12. Advantageous embodiments and variants are subject of the dependent claims. In particular, the task is also solved by each of a railcar and a lifting device for the handover station. Any descriptions and explanations in connection with the handover station also apply to the railcar, the lifting device as well as the method and vice versa. Insofar as steps of the method are explicitly or implicitly described in the following, advantageous embodiments for the handover station, the railcar and/or the lifting device result from these being configured to execute one or several of these steps. To this end, the handover station, the railcar and/or the lifting device comprise a corresponding control unit.

The handover station is configured for transferring a roll between a storage site and a production site of a plant. In particular, the roll comprises a core and a web of material, which is wound around the core. Without loss of generality, it is assumed that the material is paper and, hence, the roll is a paper roll, which is also the preferred embodiment. The handover station is also denoted as "transfer station" or "handling station". In general, the handover station is preferably fixed relative to the plant and constitutes an interface between the storage site and the production site.

The storage site e.g. comprises a number of storage areas and/or storage units for storing a number of rolls. The expression "a number" of is generally understood to mean "at least one". In the storage area, the rolls are typically stored vertically, i.e. on one of the two flat side faces of a roll such that an axis of the roll extends vertically from top to bottom in a vertical direction.

The production site comprises a number of machines to which the rolls are subsequently and/or in parallel fed to manufacture a product. The product preferably is corrugated board, i.e. the production site comprises a corrugator, which combines several layers of paper to form a web of corrugated board. However, the present invention is not restricted to any particular roll or paper roll processing machine on the production site.

The handover station comprises a first lane for a first transport vehicle for transporting a roll to or from the storage site and a second lane for a second transport vehicle for transporting a roll to or from the production site. The expression "or" is generally understood as inclusive, especially "to or from" also encompasses embodiments in which transporting may occur in both directions, e.g. "to and from" the storage/production site, however, such transporting in both directions is not mandatory. In general, the handover station is part of a logistics system of the plant and placed along a travel route from the storage to the machine or vice versa. The first and second lane constitute loading and unloading points of the handover station. Depending on the direction of transfer (from storage site to production site or vice versa), the unloading point is either in the first lane (transfer from storage site to production site) or in the second lane (transfer from production site to storage site) and the loading point then is in the other lane. The first lane and the second lane are not connected to each other, such that the travel route is disconnected at the handover station, which then assumes the task of bridging the resulting gap.

Each lane is served by at least one transport vehicle. Preferably, each transport vehicle is configured to transport exactly one roll, preferably horizontally stored on the transport vehicle. Preferably, a respective transport vehicle is fully automated and, hence, does not require any manual control. In a suitable embodiment, the transport vehicle is an AGV (automated ground vehicle) or ground track conveyor. In a particularly preferred embodiment, the storage site comprises a ground track conveyor system which serves the first lane via a number of ground track conveyors and the production site comprises an AGV system which serves the second lane via a number of AGVs. The operation and working principle of the handover station are described in in detail further below.

Preferably, the first lane is accessible from one side of the handover station (storage side) and the second lane is accessible from the opposite side of the handover station (production side). This supports physical separation of the storage and production sites. One or both lanes preferably end at the handover station, although this is not required and one or both lanes may also pass through the handover station, thereby allowing a transport vehicle to continue its travel without reversing its travel direction. In a suitable embodiment, the first and second lane are parallel to each other. In the following, the first and second lane are also denoted as "one of the lanes" and "the other lane", wherein one of the lanes is either the first or the second lane and the "the other lane" then is the remaining second or first lane.

The handover station comprises a gantry with a number of rails bridging the first lane and the second lane. Without loss of generality, it is assumed in the following that the gantry comprises two rails. The gantry generally serves as a framework for holding or supporting various components of the handover station to realize above mentioned function of transferring a paper roll. The gantry preferably is fixed relative to a floor of the plant. Preferably, the gantry is entirely rigid. The rails advantageously extend perpendicular to the lanes in a horizontal direction (also parallel to the plant's floor). The rails are in particular fixedly mounted to a suitable frame of the gantry. The rails are typically located well above the lanes, such that a transport vehicle and paper roll may pass underneath the rails into the handover station and to the loading/unloading point. Preferably, the gantry comprises two rails, which run parallel to each other and with a distance in between which is larger than a paper roll width (i.e. a dimension of a paper roll measured along its axis).

The handover station further comprises a railcar, which is movable along the rails to transfer a roll from the first lane to the second lane or vice versa. Correspondingly, the railcar comprises a number of wheels, which engage the rails. The railcar also comprises a clamping device for holding the roll. In particular, the railcar is horizontally movable, i.e. parallel to the plant's floor. The clamping device is configured to hold the roll, preferably with clamp arms pressed against the side faces of the roll, such that the roll's lateral surface is not subject to any mechanical load. The railcar further comprises a lifting device for vertically moving the clamping device and thereby lift or lower the roll from or to one of the transport vehicles in one of the lanes. Overall, the handover station is configured for moving a roll in two dimension, first, vertically in a vertical direction (up/down, also top/bottom) by way of the lifting device for loading or unloading a paper roll to/from a transport vehicle, and second, horizontally in a horizontal direction (back/forth, also back/front) by way of the railcar and rails for transferring the paper roll from one lane to the other. Perpendicular to each of the vertical and horizontal direction is a cross direction (left/right), which is parallel to the roll's axis when the roll is held by the clamping device.

In general, the principal components of the handover station are the gantry with rails, the railcar, the lifting device and the clamping device. Advantageous embodiments of these components will be explained in more detail in the following. These embodiments and the various features described in connection therewith are generally independent from each other and may be combined as desired.

### Gantry

The gantry preferably has a frame which is a combination of several assembly structure elements fastened to each other, e.g. bolted and/or welded. The assembly structure elements are e.g. beams, legs and/or stringers. In a suitable embodiment, the frame comprises a number of vertically extending square tube sections as legs and a number of horizontally extending crossbeams as stringers, e.g. of the H-profile type. The rails are preferably mounted to the two crossbeams.

Each rail preferably comprises a first rail element mounted to a top side of a horizontal assembly structure element (in particular crossbeam) of the gantry and a second rail element mounted to a bottom side of the same horizontal assembly structure element or vice versa. Each rail element is engaged by a number of wheels of the railcar for guiding the railcar during travel. The first and second rail element advantageously serve as guide structures for the railcar during travel, thereby improving the accuracy of the railcar when travelling and reducing the risk of derailing or other failures. In a suitable embodiment, the first rail element is a guide rail element with a T-shaped profile, comprising a head on which corresponding wheels of the railcar travel, wherein the wheels engage the head from the top and/or one or both sides. The second rail element preferably is a flat rail element on which corresponding wheels of the railcar travel, wherein - again - the wheels engage the flat rail element from the top and/or one or both sides.

Advantageously, at least one and preferably each rail comprises a drive rail element and the railcar comprises a corresponding drive wheel, which is configured to interact with the drive rail element for driving the railcar along the rails. In a preferred embodiment, the drive rail element is a rack and the drive wheel is a drive gear, which intermeshes with the rack to drive the railcar along the rails. In particular, the drive rail element allows a transfer of torque from a drive of the railcar to the rails via the drive gear and in any case lends additional support to the movement of the railcar. The drive rail element is preferably mounted on the side of the horizontal assembly structure element to which the first and/or second rail element are mounted. In case on an H-type assembly structure element, the drive rail element is preferably mounted on the inside of a leg of the H-profile.

### Railcar

The railcar is placed on the rails for parallel movement along the rails. In a preferred embodiment, the railcar comprises four principal parts, namely a body frame, a number of travelling supports, a number of travelling guides and a drive. For each rail of the gantry, the railcar comprises a travelling support and travelling guide. Preferably, the railcar comprises a travelling support and a travelling guide on either side. Each travelling support comprises a number of wheels which preferably engage the first rail element, while each travelling guide correspondingly comprises a number of wheels which preferably engage the second rail element. The drive, in particular, simultaneously drives the drive wheels on both sides of the railcar. In other words, a single drive is used to drive at least two drive wheels of the railcar on different rails, in particular on either side of the railcar. This achieves a particularly smooth and safe travel and prevents derailment, rollover, etc. when travelling at high speeds.

The body frame serves as a mounting carrier for the other parts and further optional accessories of the railcar. In a suitable embodiment, the body frame comprises a number of beams (e.g. massive rectangular pipes) and two wall panels at the railcar's sides. The railcar's sides delimit the railcar's extension in the horizontal direction. The beams bridge the distance between the wheels and wall panels and are fastened to the wall panels and are thus facing inwards with respect to the wall panels. Optionally, a number of stiffening elements is positioned along the beams for additional support, wherein each stiffening element connects some or all of the beams with each other.

Preferably, a travelling support and travelling guide are attached to each wall panel, preferably facing outwards. In a suitable embodiment, each travelling support is attached to an outer upper portion of the respective wall panel, such that the railcar in general is inserted between the rails. Each travelling support rests on a respective rail with the travelling support lying on the rail, in particular its first rail element. Each travelling support preferably comprises a track wheel frame and a number of track wheels, generally also denoted as wheels. The track wheels engage the first rail element and in operation move along the first rail element. In a suitable embodiment, the track wheels engage the first rail element from at least two and preferably three different sides (left, right and/or top), e.g. two wheels on each side. The travelling guide is preferably configured accordingly, however, for moving along the second rail element. In a suitable embodiment, each travelling guide is attached to an outer lower portion of the wall panel. Each travelling guide preferably comprises a guide wheel frame and a number of guide wheels, generally denoted as wheels. The guide wheels engage the second rail element and in operation move along the second rail element. In a suitable embodiment, the guide wheels engage the second rail element from at least two and preferably three different sides (left, right and/or bottom), e.g. two wheels on each side. A number of the track wheels or guide wheels are configured to travel on a side of a respective rail element and are then denoted as positioning wheels. The positioning wheels of the travelling support or guide secure the operation of the railcar preferably by engaging both sides (left and right) of the first or second rail element, respectively, and thereby so to say bracket said rail element. In addition or in the alternative, a number of the track wheels travel on the top side of the first rail element and a number of the guide wheels travel on the bottom side of the second rail element, such that the track wheels oppose (in the vertical direction) the guide wheels, thereby securely attaching the railcar to the rails and guiding the railcar along the rails. The number, positioning coupling or decoupling of the various wheels described before as well as how and from which side these engage the rail in general may vary depending on the overall design of the railcar.

The drive is e.g. mounted on a side of the body frame. In a suitable embodiment, the drive comprises a motor with dual output shafts, two drive shafts, two drive wheels, four belt seat bearings and two dual universal shafts (numbers may vary depending on necessity). The drive wheels preferably interact with the drive rail element as already mentioned above. Preferably, the drive wheels and drive rail element are configured as a rack (the drive rail element) and pinion (the drive wheels) system. The drive's motor then drives the railcar to move along the first and/or second rail elements through the dual universal shafts, the drive shafts and the drive wheels travelling on the drive rail element. The first and second rail elements primarily serve as guiding structures. The motor preferably is a servomotor or stepper motor. In particular, the motor is calibrated when mounted inside the handover station, i.e. in-situ.

In a suitable embodiment, a travel switch (also denoted "safety switch") for limiting the railcar's travel is provided at each end of a respective rail. A position detection senor is suitably provided between the two travel switches of a rail. An additional third travel switch is advantageously positioned along the rail between the other two travel switches and is used to calibrate the railcar's travel zone (total accessible range of travel), in particular by determining an initial zero correction. In other words: the third travel switch serves as a reference position for the horizontal travel. Optionally, an additional safety dead stop is provided behind a respective travel switch (not the third travel switch) and therefore outside the railcar's intended travel zone. The travel switch, in particular coupled with the safety dead stop, ensures a maximum of safety of the railcar's operation.

### Lifting Device

The lifting device for lifting (and correspondingly lowering) a roll is preferably located in or on the body frame of the railcar. In particular, the lifting device is mounted to the wall panels via support plates, which in a suitable embodiment are mounted on top of the wall panels. In a preferred embodiment, the lifting device primarily comprises a lift hanger, a number of lift guides, a lift drive and optionally a position sensor. The position sensor preferably is a drawstring type position sensor. Preferably, a respective lift guide comprises in particular a wall panel and number of guide rollers mounted on the wall panel. The guide rollers engage a number of corresponding lift rails of the lifting device for vertically moving the lift hanger. The lifting device preferably comprises a lift guide on either side (left and right) of the lift hanger, such that a number of guide rollers are mounted on either side of the lift hanger, thereby engaging a respective lift rail on either side of the railcar. In a suitable embodiment, the lifting hanger comprises a skid boom and two end wall panels fastened together, e.g. welded. In an exemplary embodiment, a lift guide comprises two pairs of guide rollers, which are mounted to one of the wall panels. Each pair of guide rollers engages a corresponding lift rail, generally extending in the vertical direction, for vertical lifting of the lift hanger. The lift rails are suitably mounted to the wall panels of the railcar. In general, the combination of skid boom, wall panels and guide rollers is advantageously movable along and relative to the lift rails. Instead of pairs of guide rollers, also single guide rollers or other numbers of guide rollers are suitable. In an exemplary embodiment, the lift rails and guide rollers are V-shaped for an optimal communication with each other.

The lift drive preferably comprises a linear actuator positioned on either side of the railcar to move the roll and especially the lift hanger in the vertical direction. The linear actuators are operated synchronously, i.e. from the same source. The use of two linear actuators which preferably are operated synchronously ensures a particularly balanced and stable lifting operation. The lift drive is preferably mounted on the railcar's body frame, e.g. via the two support plates and/or a mounting bracket. A lower part of the lift drive is advantageously connected to wall panels at both ends of the lift hanger, e.g. on the respective outer sides of the wall panels. In a suitable embodiment, the lift drive comprises a lift drive motor as source, e.g. servomotor or stepper motor, with two output shafts. The output shafts each drive a linear actuator, e.g. an electric push rod, on either side of the railcar for a vertical movement, in particular along the (fixed) lift rails. The output shafts are connected to the linear actuators via universal shafts, extending from the lift drive motor in the center of the railcar to its sides. Hence, the lift drive motor drives the two linear actuators through the two dual universal shafts to move the lift hanger in the vertical direction. In a suitable variation, the lift drive comprises a hydraulic system with hydraulic cylinders as linear actuators and with a hydraulic source instead of the lift drive motor.

The position sensors are preferably mounted to the railcar's wall panels, e.g. on the inside. In case of drawstring position sensors, each position sensor has a drawstring which is attached to the lift hanger's wall panel. In such an embodiment, the drawstrings are attached at opposite sides of the lifting hanger. The position sensors provide feedback of the vertical position of the lifting device and thereby the paper roll. In addition or in the alternative, the position sensors serve for detecting and synchronizing end points of the vertical movement. In general, the position sensors allow a particularly accurate vertical positioning of the lift hanger, also repeatedly, i.e. over many cycles of lifting and lowering, and at high speed.

### Clamping Device

The clamping device comprises in particular two clamp arms, one on each side of the railcar and for holding the roll. The clamping device advantageously further comprises a clamping drive and a position sensor, e.g. of the pull cord type. The clamping drive comprises two linear actuators, e.g. hydraulic cylinders or electric push rods, for moving the clamp arms in the cross direction, in particular along the skid boom, for gripping/clamping and releasing a roll. In a suitable embodiment, one end of each linear actuator is connected to a respective clamp arm while the other end is fixed to the railcar, especially to the skid boom, such that the linear actuators are mounted on opposite sides of the railcar, so as to drive the two clamp arms to reciprocate left and right (in the cross direction), in particular on the skid boom, by telescopic motion. The position sensor is preferably attached to the sides of the skid boom via a respective drawstring, which is attached to the corresponding clamp arm for feedback and centering of the clamp arms position. This ensures a particularly simultaneous and accurate actuation of the clamp arms and a particularly precise positioning and high repeat accuracy. The clamping drive and position sensor are suitably located on the skid boom, in particular at its center.

In a suitable embodiment, each clamp arm comprises a clamp arm body and/or a clamping chuck. Optionally one or both clamp arms comprise an ejector, preferably a pneumatic ejector. The ejector assists in roll material removal as the clamp arms release the roll. The ejector is also called "extractor". In the case of a paper roll, the ejector is a paper ejector. In a suitable embodiment, the ejector is configured to retract and thereby release the clamping chucks when these are to be inserted into the roll, especially its core, and to extend and thereby facilitate removing the roll from the clamping chucks when the clamp arms are to release the roll, thereby preventing the clamping chucks from pulling on the roll.

Preferably, each clamp arm is mounted below the skid boom and/or is slidable left and right on the skid boom. In particular, the clamp arm body is at one end connected to the skid boom and at the other end are mounted the clamping chuck and - if present - the ejector. The clamp arm body preferably is straight or bent, i.e. follows a straight or bent path. A straight clamp arm body typically is more balanced.

If hydraulic cylinders are chosen for the clamping device as well as the lifting device, the railcar may be simplified by using a common hydraulic station (or hydraulic source) for all the various hydraulic cylinders, thereby reducing cost. Any hydraulic lines may advantageously be eliminated from the handover station, by only choosing electric linear actuators, e.g. electric push rods, such that no hydraulics are necessary, thereby also simplifying the railcar.

The clamping chuck of a respective clamp arm is preferably conical, such that it guides a paper roll upon clamping it between the clamp arms, thereby facilitating insertion of the clamping chuck into a core of the paper roll and preventing the paper roll from slipping off. Preferably, the clamping chuck comprises a number of teeth configured for maximum gripping tightness, thereby preventing the paper roll from slipping off the clamping chucks.

### Operation and Working Principle

The method for transferring a roll between a storage site and a production site with the handover station as described above comprises the steps of
- the clamping device grabbing the roll from one of the transport vehicles in one of the lanes, in particular from an unloading point,
- afterwards lifting the roll from the transport vehicle by vertically moving (in particular up) the clamping device with the lifting device,
- afterwards moving the railcar and thereby also the roll horizontally from the one lane to the other lane, in particular to a loading point,
- afterwards lowering the roll to the other transport vehicle by vertically moving (in particular down) the clamping device with the lifting device,
- afterwards the clamping device releasing the roll to the other transport vehicle in the other lane.

In preparation of grabbing the roll, the clamping device's linear actuators drive the two clamp arms away from each other, preferably simultaneously, and with a distance to each other corresponding to the roll's width and with some safety margin. The clamping chucks are then positioned at a target roll center height to target the roll's core. Vertically moving the lifting device is generally achieved with the lift drive vertically moving the lift hanger. The lift drive is preferably servo controlled, in particular with a positioning accuracy of at most ± 2mm. Similarly, the railcar's drive is preferably servo controlled, in particular also with a positioning accuracy at most ± 2mm.

Upon receiving an unloading command, the railcar travels e.g. from a home point (not necessarily the loading or unloading point) to the unloading point, the lifting device moves downwards such that the clamping chucks are targeted at the roll's core and finally the roll is clamped between the clamp arms. Subsequently, the lift drive drives the lift hanger upwards, thereby also lifting the roll, in particular to a safe height for transfer above the lanes.

Upon receiving a loading command, the railcar together with the roll travels to the loading point and upon reaching it drives the lift hanger downwards, thereby also lowering the roll to a loading height onto a transport vehicle at the loading point. Subsequently, the clamping device's linear actuators drive the two clamp arms in reverse motion while the ejector extends to complete the roll's exit from the clamping device. The railcar then preferably moves to the home point, thereby completing the loading command and in combination with the previously executed unloading command also a whole transfer cycle. The handover station then waits for a subsequent unloading command of a subsequent transfer cycle.

The handover station as described above can advantageously be extended to comprise several railcars to serve more than two lanes (multi-station configuration). In a particularly advantageous embodiment, the same rails are used to carry more than one railcar at the same time. In such an embodiment, the railcars serve different areas of the handover station and each railcar is preferably restricted to its own particular section of the rails. With respect to method, the handover station then comprises two sub-stations, e.g. denoted as sub-station A and sub-station B, for which the method preferably is the same. In particular, the two (or more) sub-substations can be operated independent from each other. In an embodiment with more than one railcar, the gantry is preferably divided into several sections, one for each sub-station.

In a suitable embodiment for a multi-station configuration the handover station is configured as a dual handover station by further comprising a third lane for a third transport vehicle for transporting a roll to or from the production site, a fourth lane for a fourth transport vehicle for transporting a roll to or from the storage site and a second railcar with a lifting device and a clamping device. The second railcar is movable along the rails, which also bridge the third lane and the fourth lane, to transfer a roll from the third lane to the fourth lane or vice versa. The description further above with respect to the railcar also apply to the second railcar or any further railcar.

In a suitable embodiment, the second and third lane are connected to each other, such that a transport vehicle may travel from the second to the third lane or vice versa. In an exemplary embodiment, the second and third lane form a U-shape at the handover station. The second and third transport vehicle may be identical, although usually several transport vehicles are used in the transport system on the production side. In a suitable embodiment, a transport vehicle delivers a spent roll from the machine to the handover station via in the third lane, then moves to the second lane and waits at the handover station until a new roll has been delivered from the storage site to the handover station. Said new roll is then loaded onto said transport vehicle, which then continues towards the machine. Preferably, the second and third lane are inner lanes of the handover station and are thus positioned between the first and fourth lane, which are correspondingly outer lanes of the handover station. The first and fourth lane preferably are dead ends, although a connection is in principle also possible. In a preferred embodiment, the first and second lanes are exclusively used to deliver new rolls from the storage site to the production site for use in a machine and the third and fourth lanes are exclusively used to retrieve spent rolls from the production site and deliver these to the storage site (or vice versa).

In another suitable embodiment, a single railcar is used to transfer rolls between more than two lanes. For example, the first, second, third and fourth lane as described above in connection with a dual handover station are served by a single railcar. Thus, a single railcar as described is used instead of the two railcars as described for the dual handover station.

The handover station preferably is controlled fully automatic, in particular via a PLC. Advantageously the handover station is interconnected with a central control system or production management system of the plant. The handover station advantageously facilitates real-time information interaction, cooperation with industrial safety sensors and is more efficient and safer to operate.

In a preferred application scenario for the handover station fully automated transport vehicles, e.g. in a floor configuration, convey rolls from the storage site to the production site or vice versa. In total, a roll is delivered from the storage to a machine on the production site via two transport vehicles and the handover station, which transfers the roll between the transport vehicles. During this, no manual action is necessary and preferably no manual action occurs. However, in a possible embodiment the transfer of a roll from the storage to the first transport vehicle is realized manually, e.g. with a forklift or similar system, which loads a roll to be delivered to the handover station on the first transport vehicle.

The storage, the handover station and the machines as well as any transport vehicles advantageously work in coordination with each other and to this end are controlled by a control system of the plant. Such a control system preferably comprises a central control system, a dispatch system, a production management system etc. In a suitable embodiment, the plant in general and the handover station in particular are then operated as follows. Depending on a production schedule for the plant, the control system determines a material demand and accordingly initiates retrieval of a suitable roll from the storage. On the storage site, the roll is loaded to the first transport vehicle, e.g. with a forklift or truck. The first transport vehicle preferably is a ground rail conveyor. The ground rail conveyor is activated and delivers the roll along the first lane into the handover station. The handover station transfers the roll to the second transport vehicle in the second lane, preferably an AGV. Subsequently, the second transport vehicle delivers the roll from the handover station to a machine on the production site, e.g. a splicer or paper roll rack of a corrugator. The machine unloads the roll from the second transport vehicle. The now empty second transport vehicle or any other transport vehicle on the production site may then advantageously be used in the opposite direction to move a partially or completely spent roll, i.e. a paper roll stub, to the handover station for transfer to the storage site. Correspondingly, the roll is transferred from the second lane to the first lane and delivered to the storage. In the alternative, a (spent) roll may also be delivered to a disposal unit, which is part of the storage site.

In the following, preferred embodiments of the invention are explained in detail with reference to a drawing, said drawing schematically showing in
Fig. 1 a handover station,
Fig. 2 the handover station of Fig. 1 in a top view,
Fig. 3 a part of the handover station of Fig. 1 in a side view
Fig. 4 the handover station of Fig. 1 in a front view,
Fig. 5 a railcar of the handover station of Fig. 1,
Fig. 6 the railcar of Fig. 5 in a side view,
Fig. 7 a lifting device and clamping device of the railcar of Fig. 5,
Fig. 8 an application scenario for the handover station from Fig. 1.

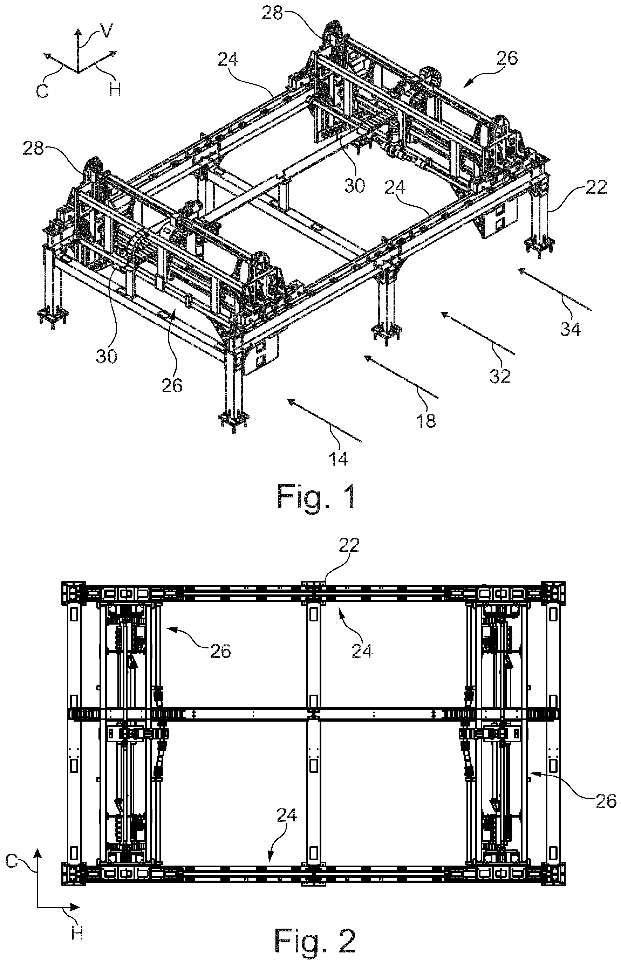

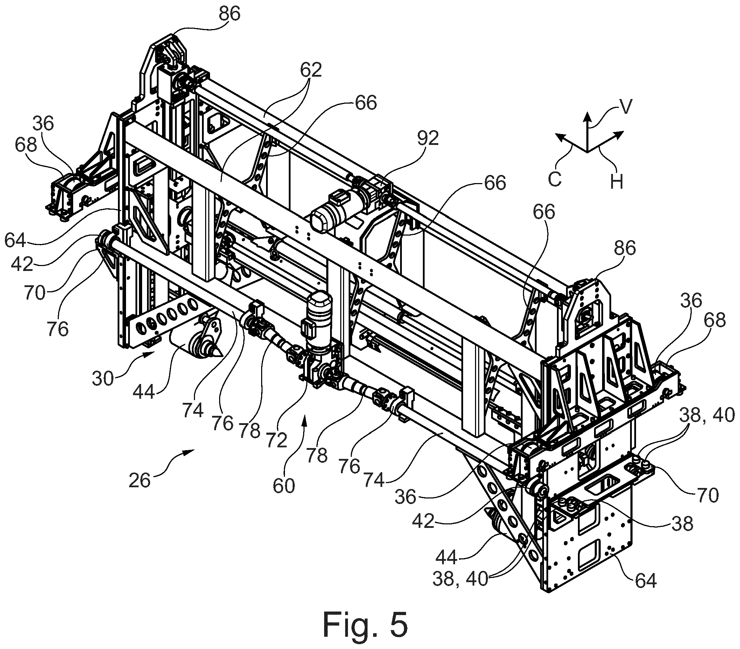

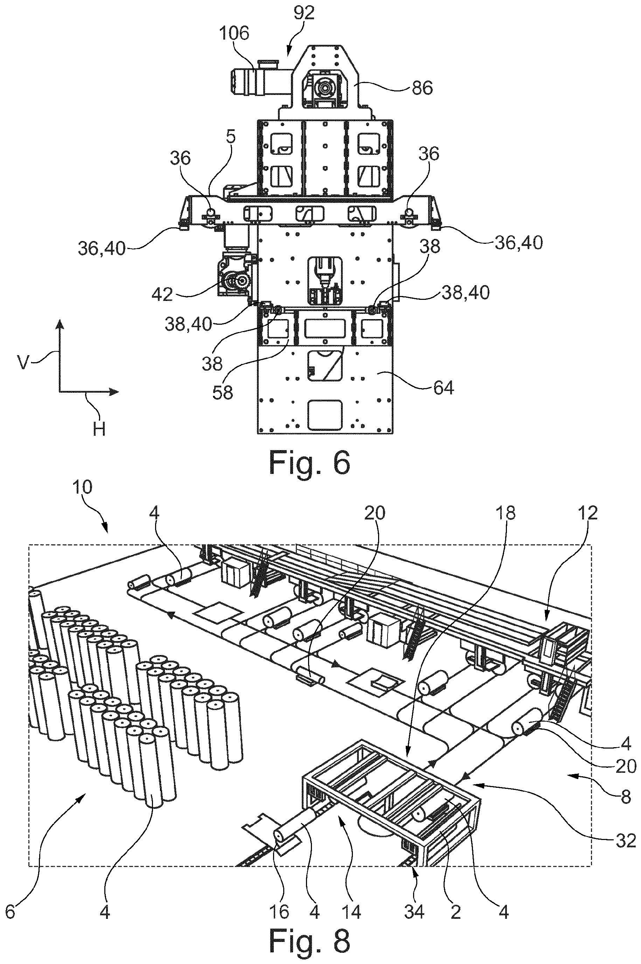

Figs. 1 to 4 show an exemplary embodiment of a handover station 2 according to the invention in various views. Fig. 1 shows the handover station 2 in a perspective view, while Figs. 2 to 4 show the handover station in a view from the top along a vertical direction V, from the side along a cross direction C and from the front along a horizontal direction H, respectively. Figs. 5 to 7 show various details of the handover station 2. The handover station 2 is configured for transferring a roll 4 between a storage site 6 and a production site 8 of a plant 10. An exemplary application scenario inside a plant 10 is shown in Fig. 8. The roll 4 comprises a core and a web of material, which is wound around the core. In the embodiment shown here, the material is paper and the roll is a paper roll. The handover station 2 is fixed relative to the plant 10 and constitutes an interface between the storage site 6 and the production site 8.

The storage site 6 comprises a number of storage areas and/or storage units for storing a number of rolls 4, e.g. as shown in Fig. 8. The expression "a number" of is generally understood to mean "at least one". In the storage area shown here, the rolls 4 are stored vertically, i.e. on one of the two flat side faces of a roll 4 such that an axis of the roll 4 extends vertically from top to bottom in the vertical direction V.

The production site 8 comprises a number of machines 12 to which the rolls 4 are subsequently and/or in parallel fed to manufacture a product. The product produced here is corrugated board, i.e. the production site 8 comprises a corrugator, which combines several layers of paper to form a web of corrugated board.

The handover station 2 comprises a first lane 14 for a first transport vehicle 16 for transporting a roll 4 to or from the storage site 6 and a second lane 18 for a second transport vehicle 20 for transporting a roll 4 to or from the production site 8. In general, the handover station 2 is part of a logistics system of the plant 10 and placed along a travel route from the storage to the machine 12 or vice versa. The first and second lane 14, 18 constitute loading and unloading points of the handover station 2. Depending on the direction of transfer (from storage site 6 to production site 8 or vice versa), the unloading point is either in the first lane 14 or in the second lane 18 and the loading point then is in the other lane. The first lane 14 and the second lane 18 are not connected to each other, such that the travel route is disconnected at the handover station 2, which then assumes the task of bridging the resulting gap. In the following, the first and second lane 14, 18 are also denoted as "one of the lanes" and "the other lane", wherein one of the lanes 14, 18 is either the first or the second lane 14, 18 and the "the other lane" then is the remaining second or first lane 14, 18. Each lane 14, 18 is served by at least one transport vehicle 16, 20. The transport vehicles 14, 18 shown here are fully automated and, hence, do not require any manual control. In Fig. 8, the second transport vehicle 20 is an AGV (automated ground vehicle) and the first transport vehicle 16 is a ground track conveyor.

In general, the principal components of the handover station 2 are a gantry 22 with rails 24, a railcar 26, a lifting device 28 and a clamping device 30.

In the exemplary embodiment shown here the handover station 2 is extended to comprise two railcars 26 to serve more than two lanes (dual handover station, in general: multi-station configuration) and the same rails 24 are used to carry more than one railcar 26 at the same time. The railcars 26 serve different areas of the handover station 2 and each railcar 26 is restricted to its own particular section of the rails 24. The handover station 2 then comprises two sub-stations for which the method for transferring a roll 4 is the same. The handover station 2 comprises a third lane 32 for a third transport vehicle, which here may be identical to the second transport vehicle 20, for transporting a roll 4 to or from the production site 8, a fourth lane 34 for a fourth transport vehicle, which here may be identical to the first transport vehicle 16, for transporting a roll 4 to or from the storage site 6 and a second railcar 26 with a lifting device 28 and a clamping device 30. The second railcar 26 is movable along the rails 24, which also bridge the third lane 32 and the fourth lane 34, to transfer a roll 4 from the third lane 32 to the fourth lane 34 or vice versa.

In the embodiment as visible in Fig. 8, the second and third lane 18, 32 are connected to each other, such that a transport vehicle 20 may travel from the second to the third lane 18, 32 or vice versa. The second and third lane 18, 32 form a U-shape at the handover station 2. Also, the second and third lane 18, 32 as shown in Fig. 8 are inner lanes of the handover station 2 and are thus positioned between the first and fourth lane 14, 34, which are correspondingly outer lanes of the handover station 2. The first and fourth lane 14, 34 are dead ends, although a connection is in principle also possible. In a possible embodiment, the first lane 14 is exclusively used to deliver new rolls 4 from the storage site 6 to the production site 8 for use in the machine 12 and the fourth lane 34 is exclusively used to retrieve spent rolls 4 from the production site 8 and deliver these to the storage site 6 (or vice versa).

The gantry 22 comprises a number of, here two, rails 24 bridging the lanes 14, 18, 32, 34. The gantry 22 generally serves as a framework for holding or supporting various components of the handover station 2 to realize above mentioned function of transferring a roll 4. The gantry 22 is fixed relative to a floor of the plant 10 and is entirely rigid. The rails 24 extend perpendicular to the lanes 14, 18, 32, 34 in the horizontal direction H. The rails 24 are fixedly mounted to a frame of the gantry 22. The rails 24 are located well above the lanes 14, 18, 32, 34, such that a transport vehicle 16, 20 and roll 4 may pass underneath the rails 24 into the handover station 2.

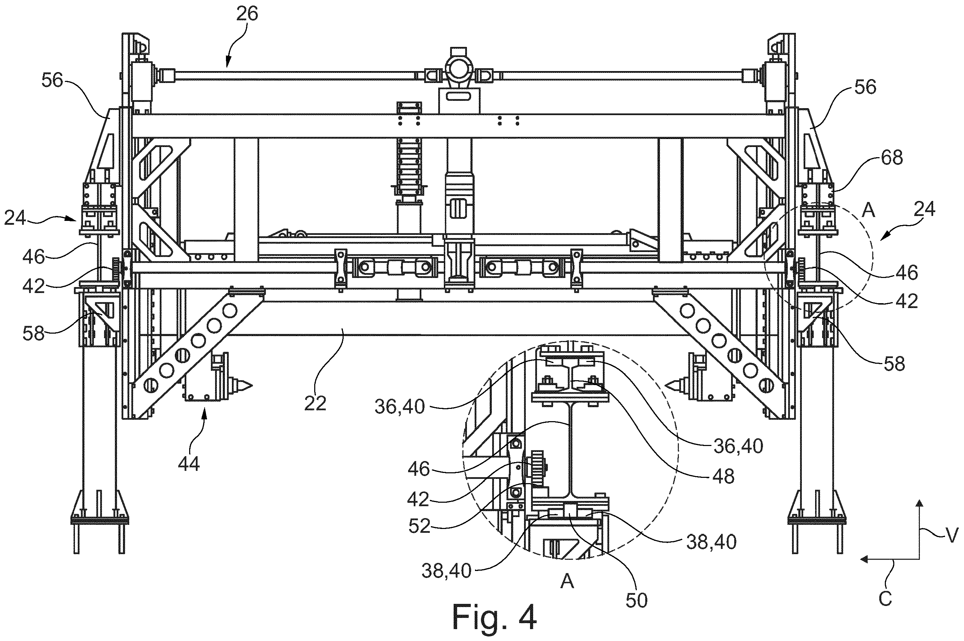

The railcar 26 is movable along the rails 24 to transfer a roll 4 from the first lane 14 to the second lane 18 or vice versa. Correspondingly, the railcar 26 comprises a number of wheels 36, 38, 40, 42, which engage the rails 24 and which are particularly visible in Figs. 4 - 6. The railcar 26 also comprises the clamping device 30 for holding the roll 4. The clamping device 30 is configured to hold the roll 4 with clamp arms 44 pressed against the side faces of the roll 4. The railcar 26 further comprises the lifting device 28 for vertically moving the clamping device 30 and thereby lift or lower the roll 4 from or to one of the transport vehicle 16, 20 in one of the lanes 14, 18, 32, 34. Overall, the handover station 2 is configured for moving a roll 4 in two dimension, first, vertically in a vertical direction V (up/down) by way of the lifting device 28 for loading or unloading a roll 4 to/from a transport vehicle 16, 20, and second, horizontally in a horizontal direction H (back/forth) by way of the railcar 26 and rails 24 for transferring the roll 4 from one lane to the other. Perpendicular to each of the vertical and horizontal direction V, H is the cross direction C, which is parallel to the roll's 4 axis when the roll 4 is held by the clamping device 30.

The gantry 22 is especially visible in Figs. 1 - 4. The gantry 22 shown here has a frame which is a combination of several assembly structure elements fastened to each other. The assembly structure elements are e.g. beams, legs and/or stringers. In the embodiment shown here, the frame comprises a number of horizontally extending crossbeams 46 of the H-profile type as stringers to which the rails 24 are mounted. The H-profile is especially visible in Fig. 4.

Each rail 24 as shown here comprises a first rail element 48 mounted to a top side of a crossbeam 46 and a second rail element 50 mounted to a bottom side of the same crossbeam 46. This is particularly visible in the inset in Fig. 4. Each rail element 48, 50 is engaged by a number of wheels 36, 38, 40 of the railcar 26 for guiding it during travel. The first rail element 48 is a guide rail element with a T-shaped profile, comprising a head on which corresponding wheels 36, 40 of the railcar 26 travel, wherein the wheels 36, 40 here engage the head from the top and both sides. The second rail element 50 is a flat rail element on which corresponding wheels 38, 40 of the railcar 24 travel, wherein - again - the wheels 38, 40 here engage the flat rail element from the top and both sides.

Each rail 24 also comprises a drive rail element 52 and the railcar 26 comprises a corresponding drive wheel 42, which is configured to interact with the drive rail element 52 for driving the railcar 26 along the rails 24. In the embodiment shown here, the drive rail element 52 is a rack and the drive wheel 42 is a drive gear, which intermeshes with the rack. The drive rail element 52 is here mounted on the inside of a leg of the H-profile type crossbeam 46.

The railcar 26 is shown in detail in Fig. 5 (perspective view) and Fig. 6 (side view). The railcar 26 comprises four principal parts, namely a body frame 54, a number of travelling supports 56, a number of travelling guides 58 and a drive 60. For each rail 24 of the gantry 22, the railcar 26 comprises a travelling support 56 and travelling guide 58, namely one of each on either side. Each travelling support 56 comprises the wheels 36, 40 which engage the first rail element 48, while each travelling guide 58 correspondingly comprises the wheels 38, 40 which engage the second rail element 50. The drive 60 simultaneously drives the drive wheels 42 on both sides of the railcar 26.

The body frame 54 serves as a mounting carrier for the other parts and further optional accessories of the railcar 26. The body frame 54 as shown here comprises a number of beams 62 and two wall panels 64 at the railcar's 26 sides. The railcar's 26 sides delimit the railcar's 26 extension in the horizontal direction H. The beams 62 bridge the distance between the wheels 36, 38, 40, 42 and wall panels 64 and are fastened to the wall panels 64 and are thus facing inwards with respect to the wall panels 64. Optionally, a number of stiffening elements 66 is positioned along the beams 62 for additional support, wherein each stiffening element 66 connects some or all of the beams 62 with each other.

A travelling support 56 and travelling guide 58 are attached to each wall panel 64, facing outwards. Each travelling support 56 is attached to an outer upper portion of the respective wall panel 64 and rests on a respective rail 24 with the travelling support 56 lying on the rail 24. Each travelling support 56 comprises a track wheel frame 68 and a number of track wheels 36, which engage the first rail element 48, here from three different sides (left, right and top). The travelling guide 58 is configured accordingly, however, for moving along the second rail element 50. Each travelling guide 58 is attached to an outer lower portion of the wall panel 64 and comprises a guide wheel frame 70 and a number of guide wheels 38, which engage the second rail element 50 from at least three different sides (left, right and bottom). A number of the track wheels 36 and guide wheels 38 are configured to travel on a side of a respective rail element 48, 50 and are then denoted as positioning wheels 40, engaging both sides (left and right) of the first or second rail element 48, 50, respectively, and thereby so to say bracket said rail element 48, 50. In addition, a number of the track wheels 36 travel on the top side of the first rail element 48 and a number of the guide wheels 38 travel on the bottom side of the second rail element 50, such that the track wheels 36 oppose (in the vertical direction V) the guide wheels 38. The number, positioning coupling or decoupling of the various wheels 36, 38, 40, 42 described before as well as how and from which side these engage the rail 24 in general may vary depending on the overall design of the railcar 26.

In the embodiment shown here, the drive 60 comprises a motor 72 with dual output shafts, two drive shafts 74, the two drive wheels 42, four belt seat bearings 76 and two universal shafts 78. The drive wheels 42 interact with the drive rail element 52 as already mentioned above. The motor 72 then drives the railcar 26 to move along the first and second rail elements 48, 50 through the universal shafts 78, the drive shafts 74 and the drive wheels 42 travelling on the drive rail element 52. The first and second rail elements 48, 50 primarily serve as guiding structures.

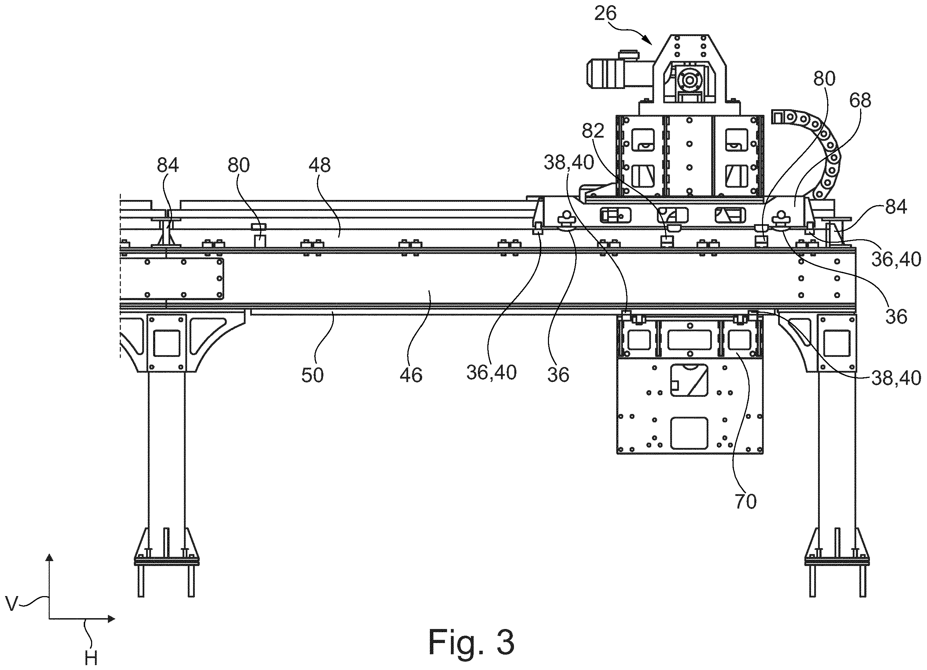

Fig. 3 also shows travel switches 80 at each end of a respective rail 24 for limiting the railcar's 26 travel. A position detection senor (not shown) is provided between the two travel switches 80. An additional third travel switch 82 is positioned along the rail 24 between the other two travel switches 80 and is used for calibration, serving as a reference position. Additional safety dead stops 84 are provided behind a respective travel switch 80 and therefore outside the railcar's 26 intended travel zone.

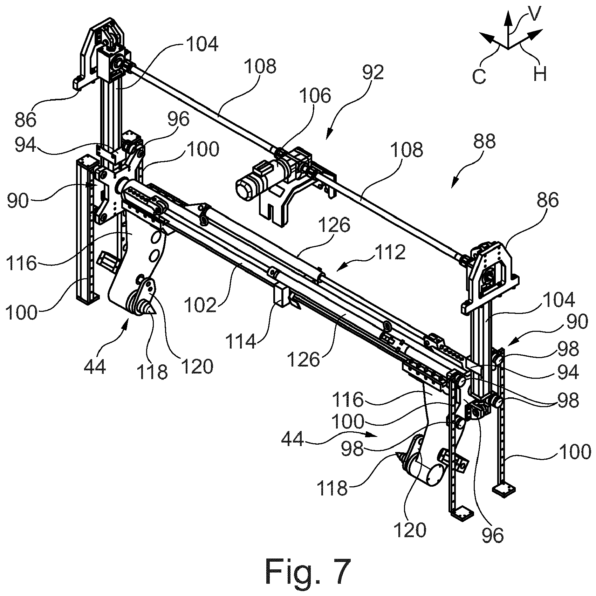

The lifting device 28 is shown in detail in Fig. 7. The lifting device 28 is located in or on the body frame 54 of the railcar 26 and mounted to the wall panels 64 via support plates 86, which are mounted on top of the wall panels 64. The lifting device 28 primarily comprises a lift hanger 88, a number of lift guides 90, a lift drive 92 and an optional position sensor 94. A respective lift guide 90 comprises a wall panel 96 and number of guide rollers 98 mounted on the wall panel 96. The guide rollers 98 engage a number of corresponding lift rails 100 of the lifting device 28 for vertically moving the lift hanger 88. The lifting device 28 comprises a lift guide 90 on either side (left and right) of the lift hanger 88, such that a number of guide rollers 98 are mounted on either side of the lift hanger 88, thereby engaging a respective lift rail 100 on either side of the railcar 26. In the embodiment shown here, the lifting hanger 88 comprises a skid boom 102 fastened to the two end wall panels 96 and a respective lift guide 90 comprises two pairs of guide rollers 98, which are mounted to a respective wall panel 96, such that the combination of skid boom 102, wall panels 96 and guide rollers 98 is movable along and relative to the lift rails 100. Each pair of guide rollers 98 engages a corresponding lift rail 100, generally extending in the vertical direction V. The lift rails 100 are mounted to the wall panels 64 of the railcar 26. Instead of pairs of guide rollers 98, also single guide rollers 98 or other numbers of guide rollers 98 are suitable. In the exemplary embodiment shown here, the lift rails 100 and guide rollers 98 are V-shaped.

The lift drive 92 comprises a linear actuator 104 positioned on either side of the railcar 26 to move the roll 4 and the lift hanger 88 in the vertical direction V. The linear actuators 104 are operated synchronously. The lift drive 92 is mounted on the railcar's body frame 54 via the two support plates 86. A lower part of the lift drive 92 is connected to wall panels 96 at both ends of the lift hanger 88, here on the respective outer sides of the wall panels 96. The lift drive 92 comprises a lift drive motor 106 with two output shafts. The output shafts each drive one of the linear actuators 104, which are here electric push rods, on either side of the railcar 26 for a vertical movement along the fixed lift rails 100. The output shafts are connected to the linear actuators 104 via universal shafts 108, extending from the lift drive motor 106 in the center of the railcar 26 to its sides. Hence, the lift drive motor 106 drives the two linear actuators 104 through the two dual universal shafts 108 to move the lift hanger 88 in the vertical direction V. In a variation not shown here, the lift drive 92 comprises a hydraulic system with hydraulic cylinders as linear actuators 104 and with a hydraulic source instead of the lift motor 106.

The position sensors 94 are mounted on the inside of the wall panels 64. In the embodiment shown here, each position sensor 94 is a drawstring position sensor, comprising a drawstring which is attached to the lift hanger's 88 wall panel 96. The clamping device 30 shown here and particularly visible in Fig. 7 comprises two clamp arms 44, one on each side of the railcar 26, and a clamping drive 112. The clamping drive comprises two linear actuators 126 for moving the clamp arms 44 in the cross direction C, here along the skid boom 102, for gripping/clamping and releasing a roll 4. One end of each linear actuator 126 is connected to a respective clamp arm 44 while the other end is fixed to the skid boom 102, such that the linear actuators 126 are mounted on opposite sides of the railcar 26, so as to drive the two clamp arms 44 to reciprocate left and right on the skid boom 102 by telescopic motion. The linear actuators 126 are used to set the distance between the clamp arms 44 and for clamping and releasing a roll 4. The clamping device 30 further comprises a position sensor 114, which here is attached to the sides of the skid boom 102 via a respective drawstring, which in turn are attached to the corresponding clamp arm 44 for feedback and centering of the clamp arms 44 position. The clamping drive 112 and position sensor 114 are located at the center of the skid boom 102.

Each clamp arm 44 as shown here comprises a clamp arm body 116, a clamping chuck 118 and a pneumatic paper ejector 120. The ejector 120 assists in roll material removal as the clamp arms 44 release the roll 4. A respective ejector 120 is configured to retract and thereby release the associated clamping chuck 118 when it is to be inserted into the core of a roll 4 and to extend and thereby facilitate removing the roll 4 from the clamping chuck 118 when the clamp arm 44 is to release the roll 4, thereby preventing the clamping chucks 118 from pulling on the roll 4.

Each clamp arm 44 is mounted below the skid boom 102 and is slidable left and right on the skid boom 102. Each clamp arm body 116 is at one end connected to the skid boom 102 and at the other end are mounted the associated clamping chuck 118 and the ejector 120. The clamp arm body 116 shown here is bent, but may also be straight.

Any of the linear actuators 104, 126 mentioned herein may be an electric pushrod, hydraulic cylinder or other suitable linear actuator type.

In the shown embodiment, the clamping chuck 118 of a respective clamp arm 44 is conical, such that it guides a paper roll 4 upon clamping it between the clamp arms 44, thereby facilitating insertion of the clamping chuck 118 into a core of the paper roll 4 and preventing the paper roll 4 from slipping off. As can be seen in Fig. 7, the clamping chuck 118 as used here comprises a number of teeth configured for maximum gripping tightness.

A method for transferring a roll 4 between the storage site 6 and the production site 8 with the handover station 2 as described above then comprises the steps of the clamping device 30 grabbing the roll 4 from an one of the transport vehicles 16, 20 in one of the lanes 14, 18, 32, 34, i.e. from an unloading point, lifting the roll 4 from the transport vehicle 16, 20 by vertically moving the clamping device 30 with the lifting device 28, moving the railcar 26 and thereby also the roll 4 horizontally from the one lane to the other lane, i.e. to a loading point, lowering the roll 4 to the other transport vehicle 16, 20 by vertically moving the clamping device 30 with the lifting device 28 and finally the clamping device 30 releasing the roll 4 to the other transport vehicle 16, 20 in the other lane.

In preparation of grabbing the roll 4, the clamping device's 30 linear actuators 104 simultaneously drive the two clamp arms 44 away from each other and with a distance to each other corresponding to the roll's 4 width and with some safety margin. The clamping chucks 118 are then positioned at a target roll center height to target the roll's 4 core.

Upon receiving an unloading command, the railcar 26 travels from a home point (e.g. defined by the travel switch 82) to the unloading point, the lifting device 28 moves downwards such that the clamping chucks 118 are targeted at the roll's 4 core and finally the roll 4 is clamped between the clamp arms 44. Subsequently, the lift drive 28 drives the lift hanger 88 upwards, thereby also lifting the roll 4 to a safe height for transfer above the lanes 14, 18, 32, 34.

Upon receiving a loading command, the railcar 26 together with the roll 4 travels to the loading point and upon reaching it drives the lift hanger 88 downwards, thereby also lowering the roll 4 to a loading height onto a transport vehicle 16, 20 at the loading point. Subsequently, the clamping device's 30 linear actuators 126 drive the two clamp arms 4 in reverse motion while the ejector 120 extends to complete the roll's 4 exit from the clamping device 30. The railcar 26 then moves to the home point, thereby completing the loading command and in combination with the previously executed unloading command also a whole transfer cycle. The handover station 2 then waits for a subsequent unloading command of a subsequent transfer cycle.

In a possible application scenario for the handover station 2, e.g. in a floor configuration as shown in Fig. 8, fully automated transport vehicles 16, 20 convey rolls 4 from the storage site 6 to the production site 8 or vice versa. In total, a roll 4 is delivered from the storage to a machine 12 on the production site 8 via two transport vehicles 16, 20 and the handover station 2, which transfers the roll 4 between the transport vehicles 16, 20. During this, no manual action is necessary. However, in a possible embodiment the transfer of a roll 4 from the storage to the first transport vehicle 16 is realized manually, e.g. with a forklift or similar system, which loads a roll 4 to be delivered to the handover station 2 on the first transport vehicle 16.

The handover station 2 shown here is controlled fully automatic, e.g. via a PLC. The handover station 2 is also interconnected with a central control system or production management system (not shown) of the plant 10. The storage, the handover station 2 and the machines 12 as well as any transport vehicles 16, 20 work in coordination with each other and to this end are controlled by the control system of the plant 10. Such a control system may comprise a central control system, a dispatch system, a production management system etc. A possible operation is as follows. Depending on a production schedule for the plant 10, the control system determines a material demand and accordingly initiates retrieval of a suitable roll 4 from the storage. On the storage site 6, the roll 4 is loaded to the first transport vehicle 16, e.g. with a forklift or truck. The first transport vehicle 16 is activated and delivers the roll 4 along the first lane 14 into the handover station 2. The handover station 2 transfers the roll 4 to the second transport vehicle 20 in the second lane 18. Subsequently, the second transport vehicle 18 delivers the roll 4 from the handover station 2 to a machine 12 on the production site 8, e.g. a corrugator or more specifically a splicer or paper roll rack of a corrugator. The machine 12 unloads the roll 4 from the second transport vehicle 20. The now empty second transport vehicle 20 or any other transport vehicle 20 on the production site 8 may then be used in the opposite direction to move a partially or completely spent roll 4, i.e. a paper roll stub, to the handover station 2 for transfer to the storage site 6. Correspondingly, the roll 4 is transferred from the second lane 18 to the first lane 14 and delivered to the storage or to a disposal unit, which is part of the storage site 6.

### List of reference numerals

- 2: handover station
- 4: roll
- 6: storage site
- 8: production site
- 10: plant
- 12: machine
- 14: first lane
- 16: first transport vehicle
- 18: second lane
- 20: second transport vehicle
- 22: gantry
- 24: rail
- 26: railcar
- 28: lifting device
- 30: clamping device
- 32: third lane
- 34: fourth lane
- 36: wheel, track wheel
- 38: wheel, guide wheel
- 40: wheel, positioning wheel
- 42: wheel, drive wheel
- 44: clamp arm
- 46: crossbeam
- 48: first rail element
- 50: second rail element
- 52: drive rail element
- 54: body frame (of railcar)
- 56: travelling support
- 58: travelling guide
- 60: drive (of railcar)
- 62: beam
- 64: wall panel (of railcar)
- 66: stiffening element
- 68: track wheel frame
- 70: guide wheel frame
- 72: motor (of railcar)
- 74: drive shaft
- 76: belt seat bearing
- 78: universal shaft
- 80: travel switch (at end of rail)
- 82: travel switch (for calibration)
- 84: dead stop
- 86: support plate (of lifting device)
- 88: lift hanger
- 90: lift guide
- 92: lift drive
- 94: position sensor (of lifting device)
- 96: wall panel (of lifting device)
- 98: guide roller
- 100: lift rail
- 102: skid boom
- 104: linear actuator (of lifting device)
- 106: lift drive motor
- 108: universal shaft (for lift drive)
- 112: clamping drive
- 114: position sensor (of clamping device)
- 116: clamp arm body
- 118: clamping chuck
- 120: ejector
- 126: linear actuator
- C: cross direction
- H: horizontal direction
- V: vertical direction

## Claims

1. Handover station (2) for transferring a roll (4) between a storage site (6) and a production site (8) of a plant (10), comprising:
- a first lane (14) for a first transport vehicle (16) for transporting a roll (4) to or from the storage site (6),
- a second lane (16) for a second transport vehicle (20) for transporting a roll (4) to or from the production site (8),
- a gantry (22) with a number of rails (24) bridging the first lane (14) and the second lane (18),
- a railcar (26), which is movable along the rails (24) to transfer a roll (4) from the first lane (14) to the second lane (18) or vice versa;
- wherein the railcar (26) comprises a clamping device (30) for holding the roll (4),
- wherein the railcar (26) comprises a lifting device (28) for vertically moving the clamping device (30) and thereby lift or lower the roll (4) from or to one of the transport vehicles (16, 20) in one of the lanes (14, 18).

2. Handover station (2) according to claim 1,
wherein each rail (24) comprises a first rail element (48) and a second rail element (50),
wherein for each rail (24) the railcar (26) comprises a travelling support (56) and a travelling guide (58),
wherein each travelling support (56) comprises a number of track wheels (36) which engage the first rail element (48), while each travelling guide (58) correspondingly comprises a number of guide wheels (38) which engage the second rail element (50),
wherein the track wheels (36) engage the first rail element (48) from at least two different sides,
wherein the guide wheels (38) engage the second rail element (50) from at least two different sides.

3. Handover station (2) according to claim 2,
wherein a number of the track wheels (36) travel on a top side of the first rail element (48) and a number of the guide wheels (38) travel on a bottom side of the second rail element (50), such that the track wheels (36) oppose the guide wheels (38).

4. Handover station (2) according to claim 2 or 3,
wherein a number of the track wheels (36) or guide wheels (48) are configured to travel on a side of a respective rail element (48, 50), engaging both sides of the first rail element (48) or the second rail element (50), respectively.

5. Handover station (2) according to one of claims 1 to 3,
wherein each rail (24) comprises a drive rail element (52) and wherein the railcar (26) comprises a corresponding drive wheel (42), which is configured to interact with the drive rail element (52) for driving the railcar (26) along the rails (24).

6. Handover station (2) according to claim 4,
wherein the railcar (26) comprises a drive (60),
wherein the drive (60) simultaneously drives the drive wheels (42) on both sides of the railcar (26).

7. Handover station (2) according to one of claims 1 to 6,
wherein the lifting device (28) comprises a lift hanger (88) and a number of lift guides (90),
wherein a respective lift guide (90) comprises a number of guide rollers (98), which engage a number of corresponding lift rails (100) of the lifting device (28) for vertically moving the lift hanger (88).

8. Handover station (2) according to one of claims 1 to 7,
wherein the lifting device (28) comprises a lift drive (92),
wherein the lift drive (92) comprises a linear actuator (104) positioned on either side of the railcar (26) to move the roll (4) in the vertical direction (V), wherein the linear actuators (104) are operated synchronously.

9. Handover station (2) according to one of claims 1 to 8,
wherein the clamping device (30) comprises two clamp arms (44), one on each side of the railcar (26) and for holding the roll (4),
wherein each clamp arm (44) comprises a clamping chuck (118), wherein one or both clamp arms (44) comprise an ejector (120), which is configured to retract and thereby release the clamping chucks (118) when these are to be inserted into the roll (4) and to extend from the clamping chucks (118) when the clamp arms (44) are to release the roll (4).

10. Handover station (2) according to one of claims 1 to 9,
which is configured as a dual handover station (2) by further comprising:
- a third lane (32) for a third transport vehicle (20) for transporting a roll (4) to or from the production site (8),
- a fourth lane (34) for a fourth transport vehicle (16) for transporting a roll (4) to or from the storage site (6),
- a second railcar (26) with a lifting device (28) and a clamping device (30);
- wherein the second railcar (26) is movable along the rails (24), which also bridge the third lane (32) and the fourth lane (34), to transfer a roll (4) from the third lane (32) to the fourth lane (34) or vice versa.

11. Handover station (2) according to claim 10,
wherein the second lane (18) and the third lane (32) are connected to each other, such that a transport vehicle (20) may travel from the second lane (18) to the third lane (32) or vice versa.

12. Method for transferring a roll (4) between a storage site (6) and a production site (8) of a plant (10) with a handover station (2) according to one of claims 1 to 11,
- wherein the clamping device (30) grabs the roll (4) from one of the transport vehicles (14, 18) in one of the lanes (16, 20, 32, 34),
- wherein afterwards the roll (4) is lifted from the transport vehicle (14, 18) by vertically moving the clamping device (30) with the lifting device (28),
- wherein afterwards the railcar (26) and thereby also the roll (4) are moved horizontally from the one lane (16, 20, 32, 34) to the other lane (16, 20, 32, 34),
- wherein afterwards the roll (4) is lowered to the other transport vehicle (14, 18) by vertically moving the clamping device (30) with the lifting device (28),
- wherein afterwards the clamping device (30) releases the roll (4) to the other transport vehicle (14, 18) in the other lane (16, 20, 32, 34).
